# DEMANDE DE BREVET EUROPEEN

(11) **EP 1 903 751 A1**
(43) Date de publication de la demande: **26.03.2008**
(21) Numéro de dépôt: 07116904.9
(22) Date de dépôt: 21.09.2007
(51) Int. Cl.: H04L 29/08, H04L 29/06

(54) **Procédé de routage d'une demande d'établissement d'appel**

(30) Priorité: 22.09.2006 FR 0653912
(71) Demandeur: France Télécom, 75015 Paris (FR)
(72) Inventeur: Fouquart, Philippe, 75015, PARIS (FR); Chong-Chauvot, Linda, 75005, PARIS (FR); Haspekian, Goar, 75012, PARIS (FR)

(57) **Abrégé**

L'invention concerne un procédé de routage d'une demande d'établissement d'appel émise par un utilisateur appelant sur un premier réseau vers un utilisateur appelé susceptible d'être présent sur le premier ou sur un deuxième réseau, par un serveur d'appel (S-GSGF_{A} 30) apte à gérer une pluralités d'utilisateurs du premier réseau, ledit premier réseau incluant un mécanisme de routage pour numéros standard (E.164) associant, dans une base (DNS ENUM 40) de traduction, au numéro standard dudit appelé des données de routage.

Selon l'invention, ledit procédé comprend les étapes suivantes :
- suite à la réception de ladite demande d'établissement d'appel vers ledit appelé, détermination de l'état de présence de l'appelé sur le premier réseau par interrogation de ladite base de traduction, ladite association stockée dans la base de traduction pour ledit appelé ayant été modifiée en réponse à une notification d'un changement d'un état de présence dudit appelé, de façon à la rendre représentative de son état de présence sur le premier réseau (IMS_{A});
- routage de ladite demande d'établissement d'appel dans le premier réseau, si l'appelé est présent sur le premier réseau; et
- routage de ladite demande d'établissement d'appel vers le deuxième réseau si l'appelé est absent du premier réseau.

## Description

### 1. Domaine de l'invention

La présente invention concerne un procédé de routage d'une demande d'établissement d'appel dans un réseau incluant un mécanisme de routage pour numéros standard associant, dans une base de traduction, au numéro standard d'un utilisateur des données comprenant au moins un identifiant de routage dans le réseau.

L'invention concerne également un serveur d'appel et une entité fonctionnelle du réseau aptes à mettre en oeuvre un tel procédé de routage.

L'invention concerne enfin un programme d'ordinateur mettant en oeuvre le procédé lorsqu'il est exécuté par un processeur.

### 2. Art antérieur

D'une manière générale, les réseaux basés sur des architectures IP Multimedia Subsystem (IMS) appliquent des mécanismes de routage différents de ceux traditionnellement utilisés dans les réseaux de téléphonie commutés (RTC). Ces mécanismes IMS reposent pour l'essentiel sur une fonction particulière de résolution d'adresse, appelée ENUM, mise en oeuvre par une base de traduction de type DNS («Domain Name System»). Le protocole ENUM (IETF RFC 3761) permet de connaître, par interrogation du système DNS à l'aide d'un numéro de téléphone, les moyens de communication disponibles pour joindre un correspondant. Le protocole ENUM fait appel à des pointeurs de ressource ou "Naming Authority Pointer Resource Records" (NAPTR records) tel que définis dans la RFC 3761 de l'IETF, qui servent à identifier les méthodes ou les services disponibles permettant de contacter un point de terminaison identifié grâce à un numéro standard E.164. Le protocole ENUM définit et utilise un type spécifique de NAPTR record dont le suffixe est "E2U" (mnémonique pour résolution "E.164 vers URI").

Dans son principe général, le résultat d'une requête ENUM peut être un ou plusieurs URIs, de l'anglais, «Uniform Resource Identifier», accompagnés de leur ordre de traitement et leur préférence, indiqués par des valeurs figurant dans les NAPTR records. Ces URIs sont alors utilisés pour référencer des ressources ou des services associés au numéro E.164 comme, par exemple, un numéro de fax, un numéro de téléphone mobile, une adresse e-mail, des services de déviation d'appels, des services de messagerie unifiés, un service de courrier vocal ou une clé publique servant aux applications de cryptage asymétrique.

Dans le cas de l'IMS, ENUM est utilisé pour associer un URI nativement routable dans les réseaux utilisant le protocole SIP (Session Initiation Protocol), ce qui est le cas des architectures IMS, à un numéro de téléphone au format standard international. Le numéro +33612345678 peut par exemple être associé dans ENUM à un URI de type prenom.nom@orange.com.

### 3. Inconvénients de l'art antérieur

La base de traduction DNS de type ENUM utilisée dans le cadre de l'IMS exploite des données de type statique, qui sont enregistrées au moment de la souscription d'un utilisateur à des services fournis par le réseau IMS. Elle est interrogée par un serveur d'appel en charge du routage d'un appel vers un numéro standard d'un appelé pour déterminer si cet appelé est hébergé ou non dans le réseau IMS. Lorsque le numéro standard est présent dans la base de traduction DNS, le serveur d'appel route l'appel dans le réseau IMS; lorsqu'il n'est pas présent dans la base de traduction, le serveur d'appel peut mettre en oeuvre une logique de service adaptée, définie par un serveur d'application. Une telle logique peut, par exemple, consister à basculer l'appel vers un service de messagerie.

La présence dans la base de traduction DNS de l'IMS permet donc uniquement de vérifier que l'utilisateur a effectivement souscrit à un réseau IMS, et non pas que l'utilisateur est couvert (enregistré) par le réseau IMS à l'instant où la vérification est réalisée. Cette information fournie par la base de traduction n'est pas adaptée dans le cas où l'appelé a souscrit à un service de convergence entre le réseau IMS et un autre réseau, par exemple un réseau mobile. En effet, la mise en oeuvre d'un tel service consiste à re-router l'appel émis par un appelant dans le réseau IMS à destination de l'appelé vers le réseau mobile, par exemple GSM, lorsque l'appelé n'est pas sous couverture du réseau IMS. La couverture IMS vient donc en complément d'une couverture GSM par exemple, puisque l'appelé peut être assez fréquemment non couvert par le réseau IMS.

Cela signifie que, dès lors que le numéro standard de l'appelé est présent dans la base de traduction, toute demande d'appel à destination de cet appelé est d'abord routée en interne dans le réseau IMS jusqu'à ce qu'il puisse être établi que l'appelé n'est pas présent sous couverture de ce réseau.

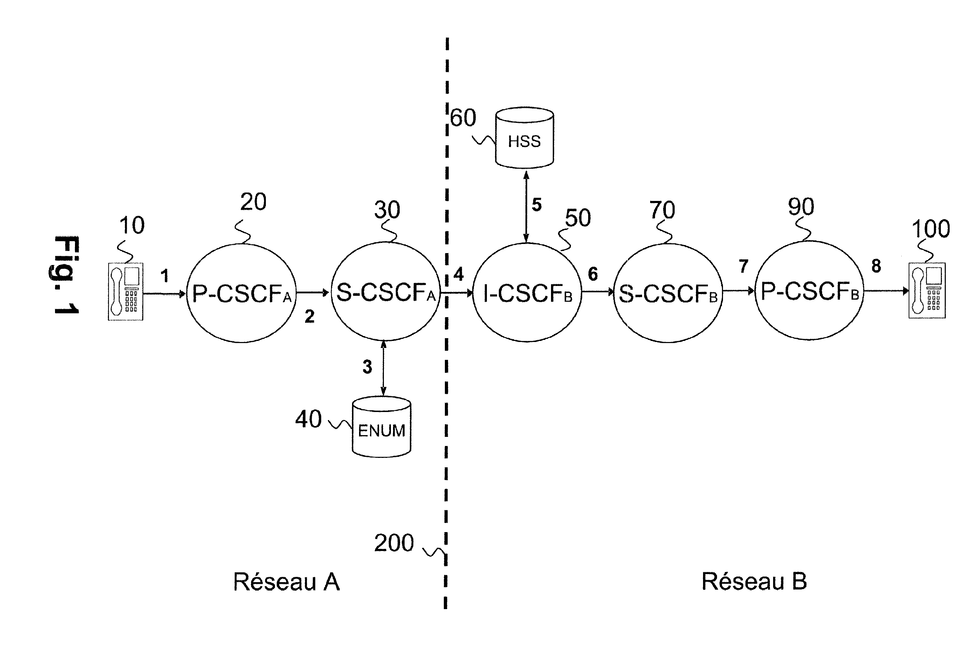

On présente, en relation avec la Fig.1 un mécanisme de routage d'un appel selon l'art antérieur, lorsque le numéro de l'appelé est présent dans la base de traduction DNS et sous couverture du réseau IMS à l'instant de l'appel.

Selon une première étape, un terminal A 10, sous couverture d'un réseau IMS A, émet, à destination d'un proxy-serveur P-CSCF_{A} (Proxy-Call Session Control Function) 20, une demande d'établissement d'appel vers un numéro de téléphone standard.

Selon une deuxième étape, la demande est transmise par le proxy-serveur P-CSCF_{A} 20 à un serveur d'appel S-CSCF_{A} (Serving-Call Session Control Function) 30, qui, selon une troisième étape, interroge une base de traduction DNS ENUM 40 pour déterminer si l'appel est destiné à un réseau IMS ou non. La présence d'une association (numéro standard de l'appelé, URI) est considérée comme une condition nécessaire et suffisante pour établir que le numéro standard de l'appelé est couvert par un réseau IMS. Dans l'affirmative, le serveur d'appel S-CSCF_{A} 30 relaie, selon une quatrième étape, la demande d'établissement d'appel vers une entité d'interrogation 1-CSCF_{B} (Interrogating-Call Session Control Function) 50. Cette entité d'interrogation I-CSCF_{B} appartient à un réseau IMS B, qui peut être confondu avec ou distinct du réseau IMS A. Cette entité d'interrogation I-CSCF_{B} est généralement déterminée par résolution du nom de domaine porté par l'URl fourni par la base de traduction DNS ENUM 40. Dans le cas où les réseaux A et B sont distincts, le message envoyé lors de l'étape 4 est alors véhiculé sur une interface d'interconnexion entre ces opérateurs. Selon une cinquième étape, cette entité d'interrogation I-CSCF_{B} 50 interroge une base de localisation HSS (Home Subscriber Server) 60 pour récupérer l'adresse d'un serveur d'appel S-CSCF_{B} 70 gérant l'appelé.

Selon une sixième étape, l'appel est acheminé vers le serveur d'appel S-CSCF_{B} 70, lequel, selon une septième étape, relaie l'appel jusqu'au proxy serveur P-CSCF_{B} 90 auquel est rattaché le terminal 100 de l'appelé.

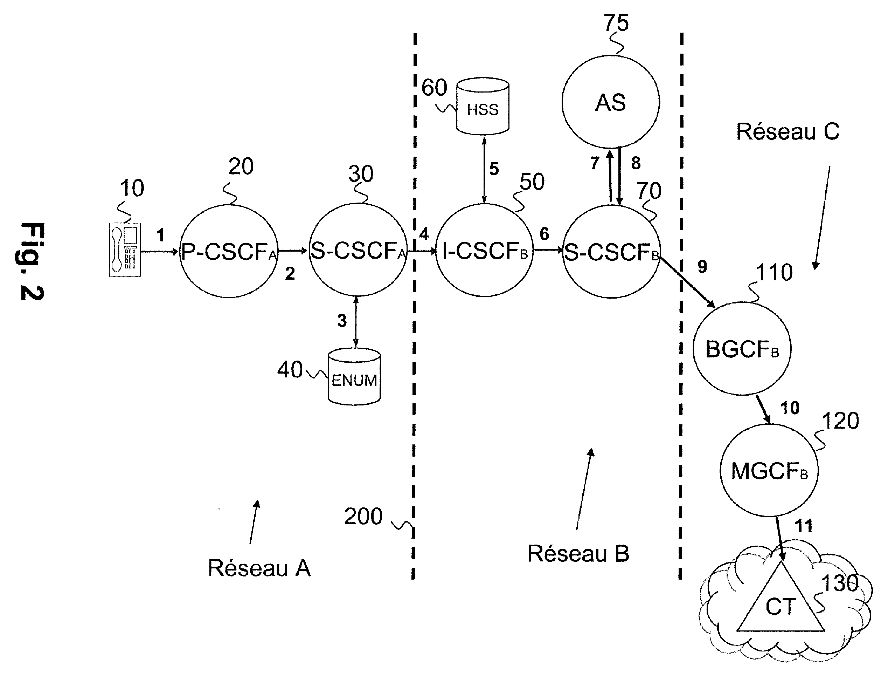

On présente maintenant, en relation avec la Fig. 2, un mécanisme de routage selon l'art antérieur d'un appel à destination d'un numéro standard présent dans la base de traduction DNS, mais non enregistré dans l'IMS au moment de l'appel.

L'appelant appartient au réseau IMS A, et conformément aux spécifications 3GPP TS 23.228 et 3GPP TS 24.228, la recherche du chemin vers l'appelé se fera selon les règles du réseau IMS.

Il faut noter que le mécanisme qui va être décrit ne constitue pas la seule solution possible, chaque opérateur ayant la latitude d'implémenter des fonctions de routage spécifiques répondant à ses besoins. Les étapes 1 à 6 correspondent aux mécanismes classiques de routage inter-réseaux IMS.

Les étapes 1 à 4 sont les mêmes que celles décrites en référence à la Fig. 1. Le serveur d'appel S-CSCF_{A} 30 détermine que l'appelé est hébergé par le réseau IMS. L'appel est donc routé vers l'entité I-CSCF_{B} 50.

Selon l'étape 5, l'interrogation de la base de données HSS permet d'une part de déterminer finalement que l'appelé n'est pas sous couverture IMS au moment de l'appel associé à cette destination au moment où l'appel est acheminé, et d'autre part d'identifier un serveur d'appel S-CSCF_{B} 70 en charge de gérer l'appelé et l'existence d'un service de convergence pour cet appelé géré par un serveur d'application AS 75.

Selon l'étape 6, la demande d'établissement d'appel est transmise au serveur d'appel S-CSCF_{B} 70 identifié.

Selon l'étape 7, le serveur d'appel S-CSCF_{B} 70 déclenche une logique de service hébergée par le serveur d'application AS 75, lequel, selon une étape 8, lui transmet les informations qui lui permettront de re-router l'appel hors du réseau IMS, par exemple, vers le réseau GSM.

Selon une étape 9, le serveur d'appel S-CSCF_{B} 70 envoie la demande d'établissement d'appel vers une passerelle d'interconnexion entre le réseau IMS et le réseau destinataire. Dans le cas où le deuxième réseau est hors IMS, par exemple le réseau GSM, il s'agit d'une entité BGCF, en anglais "Border Gateway Control Function", qui fait le lien avec un réseau C non IMS, par exemple de type RTC ou GSM. Cette passerelle vérifie la signalisation de contrôle dudit flux puis, selon une étape 10, le relaie à une entité MGCF, en anglais "Media Gateway Control Function", chargée de contrôler le contenu du flux, qui elle-même, selon une étape 11, l'achemine vers un commutateur de transit CT, le cas échéant un Mobile Switching Centre "MSC" d'entrée du réseau appelé Gateway MSC, lequel va livrer la demande d'établissement d'appel au réseau destinataire.

Par conséquent, la présence du numéro standard de l'appelé dans la base DNS ENUM induit un routage interne IMS qui amène à déterminer tardivement la présence ou l'absence de l'appelé dans le réseau IMS, à savoir au niveau du serveur d'application AS 75 (étape 8). Dans certains configurations réseau, ce serveur d'application AS 75 peut être situé très en aval dans l'appel, peut être administré par une entité/service différent(e) de celui/celle gérant les serveurs à l'origine de l'appel (étape 2), voire être situé dans un réseau IMS distinct (ou opéré par un opérateur différent, les messages de l'étape 4 de la Fig. 1 pouvant alors être véhiculés sur une interface inter-opérateurs). L'ensemble des étapes 3 à 8 engage donc systématiquement un ensemble de ressources liées au réseau IMS, que l'appelé soit finalement sous couverture de ce réseau IMS ou non.

Plus précisément, il existe un besoin d'une solution pour le routage d'un appel à destination d'un utilisateur ayant souscrit à un service de convergence entre un réseau IMS et un autre réseau, permettant d'éviter de solliciter les ressources du réseau coeur lorsque l'utilisateur n'est couvert par le réseau IMS.

### 4. Exposé de l'invention

L'invention répond à ce besoin à l'aide d'un procédé de routage d'une demande d'établissement d'appel émise par un utilisateur appelant sur un premier réseau vers un utilisateur appelé susceptible d'être présent sur le premier ou sur un deuxième réseau, par un serveur d'appel apte à gérer une pluralité d'utilisateurs du premier réseau, ledit premier réseau incluant un mécanisme de routage pour numéros standard associant, dans une base de traduction, au numéro standard dudit appelé des données de routage.

Le procédé selon l'invention est caractérisé en ce que, suite à la réception de ladite demande d'établissement d'appel vers ledit appelé, il met en oeuvre les étapes suivantes de :
- détermination de l'état de présence de l'appelé sur le premier réseau par interrogation de ladite base de traduction, ladite association stockée dans la base de traduction pour ledit appelé ayant été modifiée en réponse à une notification d'un changement d'un état de présence dudit appelé, de façon à la rendre représentative de son état de présence sur le premier réseau;
- routage de ladite demande d'établissement d'appel dans le premier réseau, si l'appelé est présent sur le premier réseau; et
- routage de ladite demande d'établissement d'appel vers le deuxième réseau si l'appelé est absent du premier réseau.

Ainsi, l'invention repose sur une approche tout à fait nouvelle et inventive du routage d'un appel dans un réseau de type IMS.

L'invention permet en effet de résoudre le problème technique d'éviter de solliciter les ressources du réseau lorsque l'utilisateur appelé n'est pas couvert par le réseau IMS., en utilisant la base de traduction comme un outil permettant de déterminer en temps réel quel type de routage doit être appliqué à une demande d'établissement d'appel à destination du numéro standard de cet utilisateur :
- lorsque le numéro associé à l'appelé est enregistré dans la base de traduction DNS, cela signifie que l'appelé est sous couverture du réseau IMS et qu'un routage classique de la demande d'établissement d'appel dans le réseau IMS peut être mis en oeuvre,
- dans le cas contraire, un routage hors IMS est directement déclenché sans qu'au préalable, des ressources du réseau n'aient été sollicitées inutilement.

De façon avantageuse, ledit procédé comprend en outre, suite à la notification de changement d'un état de présence d'un utilisateur parmi ladite pluralité d'utilisateurs sur le premier réseau, une étape d'émission d'une demande de modification de ladite association stockée dans la base de traduction pour ledit utilisateur, de façon à la rendre représentative de l'état de présence dudit utilisateur sur le premier réseau.

De cette manière, le procédé de routage selon l'invention, réalise, en parallèle de sa fonction de routage des demandes d'établissement d'appel, le déclenchement de la modification dynamique des données associées au numéro standard d'un utilisateur, en fonction de la présence ou de l'absence effective de l'utilisateur sous couverture du réseau IMS, ce qui rend la base de traduction représentative d'un état de présence de l'utilisateur sur le premier réseau.

Selon l'art antérieur, au contraire, l'enregistrement du numéro standard associé à un utilisateur dans la base se faisait de façon statique une fois pour toutes au moment de la souscription de l'utilisateur à un service du réseau IMS et de l'initialisation du profil de cet utilisateur.

Selon un aspect de l'invention, l'étape de modification de l'association consiste à enregistrer lesdites données de routage en association au numéro de téléphone de l'appelé si la notification de changement d'un état de présence de l'utilisateur correspond à une présence de l'utilisateur sur le premier réseau.

Un avantage de l'invention est que les données de routage associées au numéro de l'utilisateur sont enregistrées dans la base de traduction DNS lorsque cet utilisateur est effectivement sous couverture du réseau IMS.

Selon un autre aspect de l'invention, l'étape de modification de l'association consiste à supprimer de la base de traduction les données de routage associées au numéro de téléphone de l'utilisateur, si la notification de changement d'un état de présence de l'utilisateur correspond à une absence de l'utilisateur du premier réseau.

.Un avantage de l'invention est que le numéro associé à l'utilisateur est effacé de la base de traduction DNS lorsque cet utilisateur n'est plus sous couverture du réseau IMS. Son absence de la base de traduction permet donc de conclure à son absence du réseau IMS au moment de la consultation de la base. Un avantage est que les données de la base de traduction DNS sont mises à jour en temps réel à chaque changement de réseau d'accès du terminal nomade de l'utilisateur.

L'invention concerne également un serveur d'appel dans un premier réseau, apte à gérer une pluralité d'utilisateurs susceptibles d'être présents sur ledit premier ou sur un deuxième réseau, ledit premier réseau incluant un mécanisme de routage pour numéros standard associant, dans une base de traduction, au numéro standard dudit appelé, des données de routage dans le premier réseau.

Selon l'invention, un tel serveur d'appel est caractérisé en ce que :
- suite à la réception d'une demande d'établissement d'appel émise par un utilisateur appelant sur le premier réseau vers un utilisateur appelé, il est apte à mettre en oeuvre des moyens de :

- détermination d'un état de présence dudit appelé sur le premier réseau par interrogation de ladite base de traduction, ladite association stockée dans la base de traduction pour ledit appelé ayant été modifiée en réponse à une notification d'un changement d'un état de présence dudit appelé, de façon à la rendre représentative de son état de présence sur le premier réseau;
- en cas de présence dudit appelé sur ledit premier réseau, des moyens de routage de ladite demande d'établissement d'appel dans ledit premier réseau; et
- en cas d'absence dudit appelé du premier réseau, des moyens de routage de ladite demande d'établissement d'appel dans le deuxième réseau.

De façon avantageuse, suite la notification de changement d'un état de présence d'un utilisateur de ladite pluralité d'utilisateurs sur le premier réseau, ledit serveur d'appel est apte à émettre une demande de modification de ladite association stockée dans la base de traduction pour ledit utilisateur, de façon à la rendre représentative de l'état de présence dudit utilisateur sur le premier réseau.

L'invention concerne également une entité fonctionnelle apte à mettre en oeuvre un service de convergence entre un premier et un deuxième réseaux, ledit premier réseau incluant un mécanisme de routage pour numéros standard (E.164) associant, dans une base (DNS ENUM) de traduction, au numéro standard d'un utilisateur des données de routage dans le premier réseau.

Selon l'invention, ladite entité est caractérisée en ce qu'elle comprend:
- des moyens de réception d'une demande de modification de l'association stockée pour un utilisateur dudit service, ladite demande comprenant une notification de changement d'un état de présence de l'utilisateur dans le premier réseau;
- des moyens de modification de l'association stockée pour ledit utilisateur aptes à être déclenchés en réponse à ladite demande, de façon à rendre ladite association représentative de l'état de présence dudit utilisateur dans le premier réseau.

De façon avantageuse, ladite entité fonctionnelle peut être assurée par un serveur d'application, notamment le serveur d'application spécifiquement en charge du service de convergence, ce qui permet de localiser les modifications de l'architecture du réseau IMS. Toutefois, ladite entité fonctionnelle peut également être assurée par une passerelle domestique. Un avantage est qu'une telle passerelle présente une souplesse d'évolution qui facilite la mise en oeuvre de l'entité fonctionnelle. Il faut noter enfin que ladite entité fonctionnelle peut être mise en oeuvre sous la forme d'un logiciel embarqué dans un terminal.

L'invention concerne enfin un produit programme d'ordinateur téléchargeable depuis un réseau de communication et/ou stocké sur un support lisible par ordinateur et/ou exécutable par un microprocesseur.
Le produit programme d'ordinateur selon l'invention est remarquable en ce qu'il comprend des instructions de code de programme pour l'exécution du procédé de routage d'une demande d'établissement d'appel, lorsqu'il est exécuté sur un ordinateur.

### 5. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure 1 représente un schéma synoptique illustrant la structure et le fonctionnement d'un procédé de routage pour l'établissement d'un appel à destination d'un appelé ayant souscrit à un service de convergence entre le réseau IMS et un autre réseau, lorsque l'appelé est enregistré dans le réseau IMS, selon l'art antérieur,
- la figure 2 représente un schéma synoptique illustrant la structure et le fonctionnement d'un procédé de routage pour l'établissement d'un appel d'un appelant à destination d'un appelé ayant souscrit à un service de convergence entre le réseau IMS et un autre réseau, lorsque l'appelé n'est pas enregistré dans le réseau IMS, selon l'art antérieur,
- la figure 3 représente un schéma synoptique illustrant le mécanisme d'enregistrement/désenregistrement d'un utilisateur dans un réseau IMS selon l'invention,
- la figure 4 représente un schéma synoptique illustrant la structure et le fonctionnement d'un procédé de routage selon l'invention pour l'établissement d'un appel à destination d'un appelé ayant souscrit à un service de convergence entre le réseau IMS et un autre réseau, lorsque l'appelé n'est pas enregistré dans le réseau IMS,
- la figure 5A représente un schéma synoptique illustrant la structure d'un serveur d'application selon un aspect de l'invention, et
- la figure 5B représente un schéma synoptique illustrant la structure d'un serveur d'appel selon un aspect de l'invention.

### 6. Description d'un mode de réalisation particulier de l'invention

Le principe général de l'invention repose sur la modification dynamique des données associées à un numéro standard d'un utilisateur dans la base de traduction d'un réseau IMS en fonction de la présence ou de l'absence de cet utilisateur sous couverture du réseau IMS.

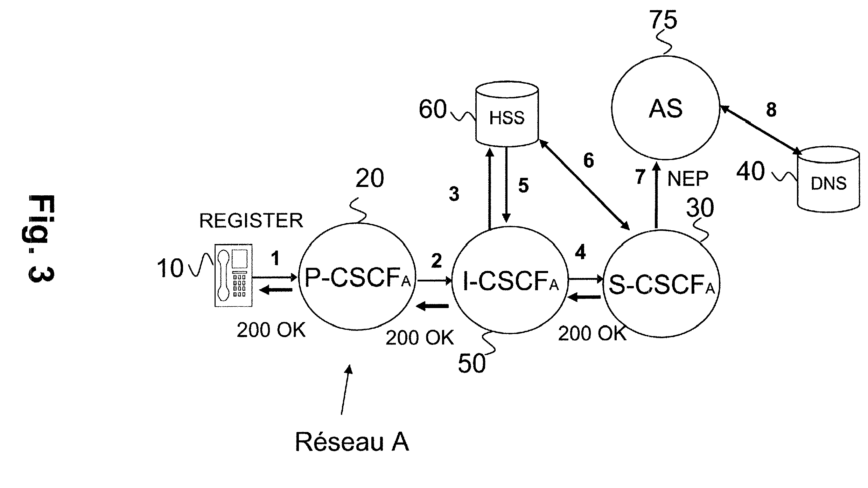

En référence à la Fig. 3, on présente le procédé d'enregistrement/désenregistrement d'un terminal de cet utilisateur selon l'invention.

A sa connexion/déconnexion au réseau, un terminal 10 d'un utilisateur A envoie, dans une première étape du procédé, un message d'enregistrement/désenregistrement REGISTER à travers le réseau, par exemple, par l'intermédiaire du protocole de signalisation SIP. Un tel message comprend le numéro standard associé à l'utilisateur. Ledit message est d'abord reçu par un serveur proxy P-CSCF_{A} 20, puis dans une deuxième étape par un serveur d'interrogation I-CSCF_{B} 50 et par un serveur d'appel S-CSCF_{A} 30 dans une quatrième étape. Le serveur d'interrogation 50 transmet le message à une base de localisation HSS 60, acronyme anglais de "Home Subscriber Server" dans une troisième étape. Au cours des cinquième et sixième étapes du procédé selon l'invention, la base de localisation émet, en réponse au message reçu, un message d'acquittement comprenant d'éventuelles données associées audit numéro standard, à destination de l'utilisateur et de la pluralité d'entités SIP précédemment citée. Lesdites données comprennent notamment au moins un identifiant (URI SIP) de routage dans le réseau. Elles ont été stockées dans la base de localisation HSS 60 lors d'une phase préalable de souscription de l'utilisateur à des services fournis par le réseau. Ces échanges de messages correspondent aux flux référencés par les flèches 1 à 6 sur la Fig. 3.

Le message d'acquittement est, par exemple, un message du type "200 OK" selon le protocole de signalisation SIP.

Le procédé selon l'invention comprend une étape 7 d'envoi par le serveur d'appel S-CSCF_{A} 30, en réponse au message d'acquittement qu'il a reçu, d'une notification NEP d'un changement d'état de présence dudit utilisateur à une entité fonctionnelle destinataire du réseau et une étape 8 de modification par ladite entité destinataire des données associées audit numéro standard dans la base de traduction (DNS ENUM) en réponse à ladite notification.

Il faut noter que cette entité destinataire peut être toute entité du réseau qui reçoit ladite notification de présence ou d'absence de la part de l'entité de services S-CSCF_{A}, par exemple un serveur d'application, un proxy serveur, une passerelle domestique ou même le terminal de l'utilisateur par l'intermédiaire de son client SIP.

Un avantage d'affecter ce rôle au serveur d'application spécifiquement en charge du service de convergence entre le réseau IMS et un autre réseau est que cela permet de mutualiser les moyens mis en oeuvre.

De façon avantageuse, une telle étape de modification réalise un enregistrement des données associées au numéro standard dans la base de traduction lorsqu'une notification de connexion au réseau a été reçue. Au contraire, elle réalise un effacement des données associées au numéro standard dans la base de traduction lorsqu'une notification de déconnexion a été reçue.

Le mécanisme d'enregistrement/désenregistrement des données associées au numéro standard d'un utilisateur dans la base de traduction DNS selon l'invention se distingue donc de l'art antérieur en ce que la modification des données associées au numéro standard de l'utilisateur n'est pas faite, une fois pour toutes, au moment de la souscription de l'utilisateur à des services fournis par le réseau, par un système informatique en charge de superviser le réseau IMS, mais à chaque connexion/déconnexion de l'utilisateur au réseau, par une entité du réseau IMS, apte à communiquer, par exemple, à l'aide du protocole SIP.

De cette façon, la présence ou l'absence de données associées au numéro standard de cet utilisateur dans la base de traduction DNS fait état, en temps réel, de la présence ou l'absence de cet utilisateur sous couverture du réseau IMS.

L'invention présente un intérêt tout particulier dans le cas de l'appel d'un utilisateur ou appelé ayant souscrit à un service de convergence entre un premier réseau IMS A et un second réseau C IMS ou non IMS. Dans ce qui suit, on considère que le second réseau est le réseau GSM. Il faut toutefois noter que l'invention ne se limite pas à cet exemple, mais concerne également un second réseau IMS possédant une base de traduction DNS différente de celle du premier réseau, ou tout autre réseau.

Dans ce cas, l'appelé peut être présent ou absent du premier réseau IMS.

Le procédé de routage selon l'invention comprend une phase préalable d'enregistrement/désenregistrement du numéro standard de l'utilisateur de la base de traduction DNS telle que celle précédemment décrite.

Lors d'une demande d'établissement d'appel d'un appelant vers un appelé, le serveur d'appel S-CSCF_{A} 30 détermine, comme dans l'art antérieur, si l'appelé est hébergé par l'IMS en interrogeant la base de traduction DNS par l'intermédiaire du serveur d'interrogation I-CSCF 50. Le procédé de routage selon l'invention se distingue de l'art antérieur en ce que la réponse que le serveur d'appel obtient fait état non seulement du fait que l'appelé est hébergé par le premier réseau IMS,A mais aussi de sa présence ou de son absence effective à l'instant de la demande d'établissement sous couverture de ce premier réseau.

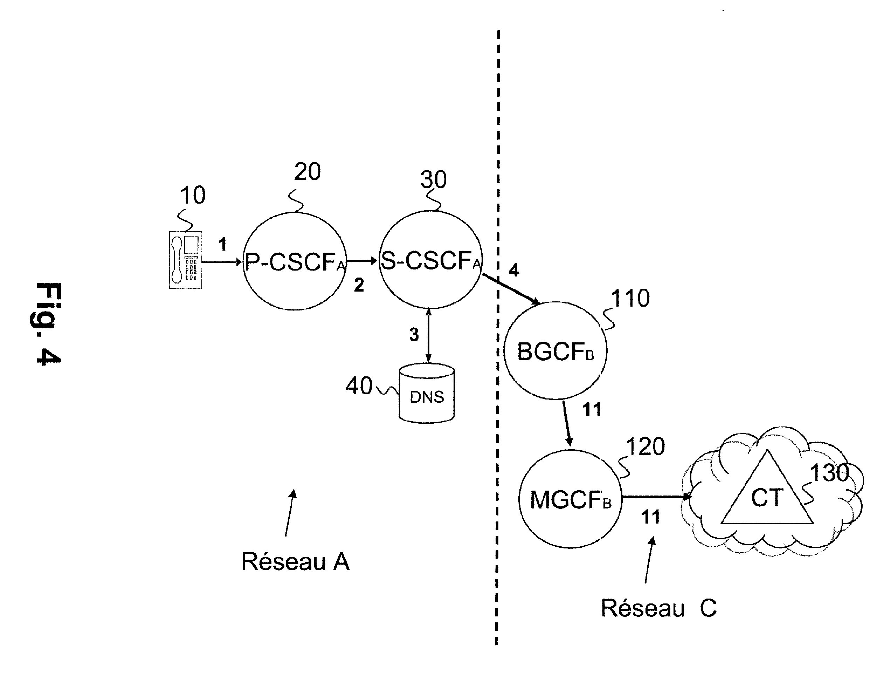

On distingue les deux cas suivants:
1. L'appelé est présent sous couverture du premier réseau : dans ce cas, le routage de l'appel vers l'appelé se fait de façon classique comme décrit précédemment en référence à la Fig.1,
2. L'appelé n'est pas sous couverture du premier réseau : dans ce deuxième cas, le routage de l'appel vers l'appelé se fait comme décrit ci-dessous en référence à la Fig. 4.

Le serveur d'appel S-CSCF_{A} 30 établit, suite à la réponse de la base de traduction DNS que l'appelé n'est pas actuellement sous couverture du réseau IMS. Il sait également par l'intermédiaire de la base de profils utilisateurs HSS 60 et des informations retransmises par celle-ci au moment de l'acquittement de l'enregistrement que cet appelé a souscrit à un service de convergence entre le premier réseau IMS 1 et un deuxième réseau. Il va donc déclencher une logique de service hébergée par ce serveur d'application pour re-router l'appel hors du réseau IMS A. Pour ce faire, il envoie le flux comprenant la demande d'établissement d'appel vers une passerelle d'interconnexion 110 située entre le premier réseau et le deuxième réseau. Dans le cas où le deuxième réseau C est hors IMS, par exemple le réseau GSM, il s'agit d'une entité BGCF, en anglais "Border Gateway Control Function", qui fait le lien avec le réseau non IMS, par exemple de type RTC ou GSM. Cette passerelle vérifie la signalisation de contrôle de dudit flux puis le relaie à une entité MGCF 120, en anglais "Media Gateway Control Function", chargée de contrôler le contenu du flux, qui elle-même l'achemine vers un commutateur de transit CT 130.

Il faut noter qu'un tel re-routage est classique et qu'il est réalisé de la même façon que dans l'art antérieur lorsqu'il est établi suite à l'interrogation de la base de traduction DNS que l'appelé n'est pas hébergé par le premier réseau IMS A.

Un avantage du procédé de routage selon l'invention est qu'il permet la mise en oeuvre d'un tel re-routage dans le cas où l'appelé n'est pas présent sous couverture du premier réseau IMS. Plus précisément, l'information temps réel d'enregistrement/désenregistrement de l'appelé fournie par la base de traduction DNS, permet d'anticiper la prise de décision d'un tel re-routage et donc d'optimiser globalement le routage de l'appel dans le premier réseau IMS.

Un deuxième avantage du procédé de routage selon l'invention est qu'il met en oeuvre des mécanismes de routage et de re-routage classiques. Il n'impose donc pas de modification majeure de l'architecture du réseau IMS existant.

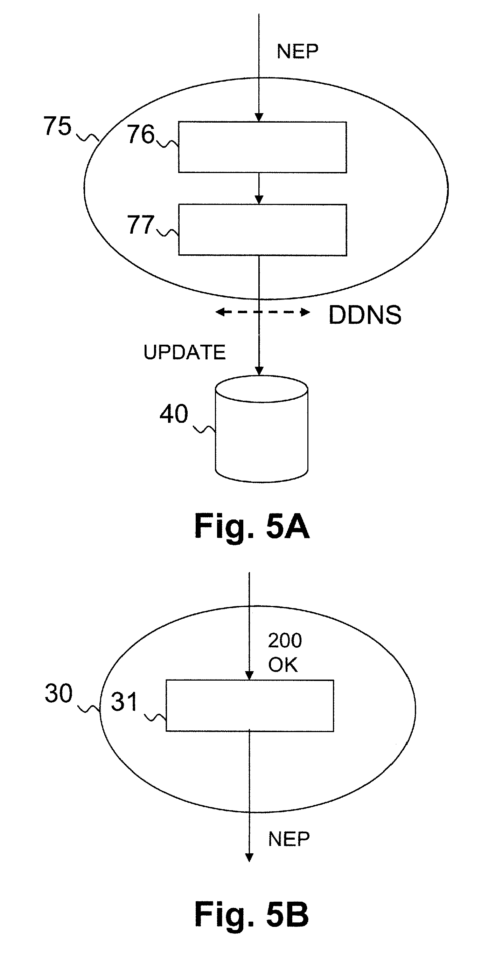

On décrit maintenant, en référence à la figure 5A le serveur d'appel S-CSCF_{A} 30 selon l'invention. Un tel serveur comprend des moyens 31 de notification d'un changement d'état de présence NEP dudit utilisateur dans ledit réseau en réponse à un message d'acquittement 200 OK faisant état d'un enregistrement/désenregistrement d'un terminal 10 dudit utilisateur dans ledit réseau, à destination du serveur d'application 75.

En référence à la Fig. 5B, le serveur d'application 75 comprend des moyens de réception 76 d'une notification de changement d'un état de présence NEP de l'utilisateur associé audit numéro standard dans le réseau, et des moyens de modification 77 des données associées audit numéro standard dans ladite base de traduction 40. De tels moyens de modification 77 sont aptes à être déclenchés en réponse à ladite notification NEP. Selon un aspect de l'invention, ils sont aptes à envoyer un message de modification des données associées audit numéro standard. Un tel message peut être, par exemple un message UPDATE selon un protocole de type Dynamic DNS (IETF RFC 2136).

Lors de l'enregistrement des données associées au numéro standard dans la base de traduction 40, le message UPDATE comprend un pointeur de ressources RESOURCE RECORD de type NAPTR associé aux URIs stockées dans la base de traduction 40 pour ledit numéro standard.

Lors du désenregistrement des données associées au numéro standard dans la base de traduction 40, le message UPDATE comprend des instructions d'effacement du pointeur de ressources RESOURCE RECORD de type NAPTR associé aux URls stockées dans la base de traduction 40 pour ledit numéro standard.

Selon une variante, lors du désenregistrement des données associées au numéro standard, le message UPDATE comprend des instructions permettant d'associer le pointeur de ressources RESOURCE RECORD, non plus aux URIs précédentes, mais à l'adresse de la passerelle d'interconnexion 110 vers le second réseau.

## Revendications

1. Procédé de routage d'une demande d'établissement d'appel émise par un utilisateur appelant sur un premier réseau vers un utilisateur appelé susceptible d'être présent sur le premier ou sur un deuxième réseau, par un serveur d'appel (S-CSCF_{A} 30) apte à gérer une pluralités d'utilisateurs du premier réseau, ledit premier réseau incluant un mécanisme de routage pour numéros standard (E.164) associant, dans une base (DNS ENUM 40) de traduction, au numéro standard dudit appelé des données de routage, **caractérisé en ce que** ledit procédé comprend les étapes suivantes :
- suite à la réception de ladite demande d'établissement d'appel vers ledit appelé, détermination de l'état de présence de l'appelé sur le premier réseau par interrogation de ladite base de traduction, ladite association stockée dans la base de traduction pour ledit appelé ayant été modifiée en réponse à une notification d'un changement d'un état de présence dudit appelé, de façon à la rendre représentative de son état de présence sur le premier réseau (IMS_{A});
- routage de ladite demande d'établissement d'appel dans le premier réseau, si l'appelé est présent sur le premier réseau; et
- routage de ladite demande d'établissement d'appel vers le deuxième réseau si l'appelé est absent du premier réseau.

2. Procédé de routage selon la revendication 1, **caractérisé en ce que**, suite à la notification de changement d'un état de présence d'un utilisateur parmi ladite pluralité d'utilisateurs sur le premier réseau, ledit procédé comprend une étape d'émission d'une demande de modification de ladite association stockée dans la base de traduction pour ledit utilisateur, de façon à la rendre représentative de l'état de présence dudit utilisateur sur le premier réseau;

3. Procédé de routage selon la revendication 2, **caractérisé en ce que** ladite modification de l'association consiste à enregistrer lesdites données de routage en association au numéro de téléphone de l'utilisateur, si la notification de changement d'un état de présence de l'utilisateur correspond à une présence de l'utilisateur sur le premier réseau.

4. Procédé de routage selon l'une des revendications 2 et 3, **caractérisé en ce que** ladite modification de l'association consiste à supprimer de la base de traduction les données de routage associées au numéro de téléphone de l'utilisateur, si la notification de changement d'un état de présence de l'utilisateur correspond à une absence de l'utilisateur du premier réseau.

5. Serveur d'appel (S-CSCF_{A} 30) dans un premier réseau, apte à gérer une pluralité d'utilisateurs susceptibles d'être présents sur ledit premier ou sur un deuxième réseau, ledit premier réseau incluant un mécanisme de routage pour numéros standard associant, dans une base de traduction, au numéro standard d'un utilisateur, des données de routage dans le premier réseau, **caractérisé en ce que**, suite à la réception d'une demande d'établissement d'appel émise par un utilisateur appelant sur le premier réseau vers un utilisateur appelé, il est apte à mettre en oeuvre des moyens de :
- détermination d'un état de présence dudit appelé sur le premier réseau par interrogation de ladite base de traduction, ladite association stockée dans la base de traduction pour ledit appelé ayant été modifiée en réponse à une notification d'un changement d'un état de présence dudit appelé, de façon à la rendre représentative de son état de présence sur le premier réseau;
- en cas de présence dudit appelé sur ledit premier réseau, des moyens de routage de ladite demande d'établissement d'appel dans ledit premier réseau; et
- en cas d'absence dudit appelé du premier réseau, des moyens de routage de ladite demande d'établissement d'appel dans le deuxième réseau.

6. Serveur d'appel selon la revendication 5, **caractérisé en ce que**, suite à la notification de changement d'un état de présence d'un utilisateur de ladite pluralité d'utilisateurs sur le premier réseau, ledit serveur d'appel est apte à émettre une demande de modification de ladite association stockée dans la base de traduction pour ledit utilisateur, de façon à la rendre représentative de l'état de présence dudit utilisateur sur le premier réseau.

7. Entité fonctionnelle (AS 75) apte à mettre en oeuvre un service de convergence entre un premier et un deuxième réseaux, ledit premier réseau incluant un mécanisme de routage pour numéros standard (E.164) associant, dans une base (DNS ENUM) de traduction, au numéro standard d'un utilisateur des données de routage dans le premier réseau, ladite entité étant **caractérisée en ce qu'**elle comprend:
- des moyens de réception (76) d'une demande de modification de l'association stockée pour un utilisateur dudit service, ladite demande comprenant une notification de changement d'un état de présence de l'utilisateur dans le premier réseau;
- des moyens de modification (77) de l'association stockée pour ledit utilisateur aptes à être déclenchés en réponse à ladite demande, de façon à rendre ladite association représentative de l'état de présence dudit utilisateur dans le premier réseau.

8. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de routage d'une demande d'établissement d'appel selon l'une au moins des revendications 1 à 4, lorsqu'il est exécuté sur un ordinateur.
